(19) **Europäisches Patentamt European Patent Office Office européen des brevets**

(11) **EP 4 270 236 B1**

(12) **EUROPEAN PATENT SPECIFICATION**

(45) Date of publication and mention
of the grant of the patent:
**16.07.2025 Bulletin 2025/29**

(21) Application number: **22169732.9**

(22) Date of filing: **25.04.2022**

(51) International Patent Classification (IPC):
**G06F 30/27** (2020.01)          **G06F 30/12** (2020.01)
**G06N 3/00** (2023.01)

(52) Cooperative Patent Classification (CPC):
**G06F 30/27; G06F 16/90335; G06F 30/12;
G06N 3/042; G06N 3/09**

(54) **METHOD AND DEVICE FOR PROVIDING A RECOMMENDER SYSTEM**

VERFAHREN UND VORRICHTUNG ZUR BEREITSTELLUNG EINES EMPFEHLUNGSSYSTEMS

PROCÉDÉ ET DISPOSITIF POUR FOURNIR UN SYSTÈME DE RECOMMANDATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.11.2023 Bulletin 2023/44**

(73) Proprietor: **Siemens Aktiengesellschaft
80333 München (DE)**

(72) Inventors:
• **Akella, Chandra Sekhar
Madison, 35758 (US)**
• **Hildebrandt, Marcel
80634 München (DE)**
• **Joblin, Mitchell
81825 München (DE)**
• **Mogoreanu, Serghei
81827 München (DE)**

(74) Representative: **Siemens Patent Attorneys
Postfach 22 16 34
80506 München (DE)**

(56) References cited:
**US-B1- 10 437 954**

• **DI ROCCO JURI ET AL: "A GNN-based Recommender System to Assist the Specification of Metamodels and Models", PROCEEDINGS OF THE 24TH ACM/IEEE INTERNATIONAL CONFERENCE ON MODEL DRIVEN ENGINEERING LANGUAGES AND SYSTEMS, 10 October 2021 (2021-10-10), pages 70 - 81, XP034017555, DOI: 10.1109/ MODELS50736.2021.00016**
• **MORA SEGURA ÁNGEL ET AL: "Extremo: An Eclipse plugin for modelling and meta-modelling assistance", SCIENCE OF COMPUTER PROGRAMMING, vol. 180, 18 May 2019 (2019-05-18), pages 71 - 80, XP085745527, DOI: 10.1016/J.SCICO.2019.05.003**
• **REKHA M: "Entropy, Information gain, and Gini Index;the crux of a Decision Tree", PUBLISHED IN CLAIRVOYANT BLOG, 14 October 2019 (2019-10-14), pages 1 - 5, XP055973012, Retrieved from the Internet <URL:https://blog. clairvoyantsoft.com/ entropy-information-gain-and-gini-index-the- crux-of-a-decision-tree-99d0cdc699f4> [retrieved on 20221019]**

**Description**

**Field of the Invention**

The invention relates to a computer implemented method for providing a recommender system for a design process. The invention further relates to a corresponding computer program and recommendation device.

**Background**

a) Design of a complex system

For industrial applications, engineers often need to design a complex system which comprises a multitude of interconnected components.

The complex system can be, e.g., an engineering project, e.g., an electric or electronic circuit, an ASIC (application specific integrated circuit), a circuit having one or more FPGAs (field programmable gate arrays), a processor, a SoC (system on chip), an embedded system, a substance, a production unit etc.

The design of such a complex system is usually performed in engineering tools, which are run on a computer, and can be described as an iterative process of identifying components whose interplay will fulfill the functional requirements arising from the intended application of the overall system, introducing the identified components into the project, and connecting them to one another such that the resulting interconnected components allow the intended real-world application.

b) Representation of the complex system as a graph

Such complex systems can be well represented in the form of graphs, with every component represented as a node, and connections that exist between the components represented as edges which might be typed, i.e., describing the type of connection. As a simple example, consider a printed circuit board (PCB), with electronic components acting as nodes and conductive tracks between them acting as edges, i.e., links.

c) Engineering Tools for designing complex systems

Designing and configuring such a system is an iterative process typically done using software tools specifically designed for this purpose. An example for such a tool is, e.g., Xpedition xDX Designer, in which the engineer incrementally selects components, which in combination fulfill all functional requirements, while being compatible with one another. Each of these components possesses a set of static technical features that influence their capabilities and compatibility with other components.

d) ML solution for engineering software using GNNs

Due to the sheer number of available components or items, as well as the ways of connecting them, the number of criteria to be taken into account and alternatives to be considered, this process is time-consuming, requires technical expertise, domain knowledge and effort to be completed correctly. One way of supporting the engineer in this process is to integrate into the engineering tool a recommender system that would suggest appropriate and compatible components to be added into the engineering project. In other words, the engineers are supported in identifying suitable items at every step of the design or/and configuration process.

When it comes to designing a machine learning (ML) solution for such an engineering tool, e.g., a recommendation system for suggesting suitable components to engineers in the process of configuring an engineering system, one of the major challenges is finding a way to encode the irregular, inherently non-Euclidean topologies of graphs so that they can be easily exploited by machine learning models for various downstream tasks. This task becomes even more difficult in the presence of certain model deployment constraints.

A most commonly used approach for encoding graph structures is using graph neural networks which are denoted in this application as GNNs. The goal when using GNNs is to overcome the information overload which, e.g., is caused by a massive number of available items via personalized ranking and filtering methods.

Often, it is possible to introduce a so called "recommendation system" that is trained on historical project examples to recommend items to be added next to a partially configured project. The problem is that- when the partially configured project does not resemble anything seen in the training data-the output of a typical recommendation system is likely unreliable. This may even lead to an increase in confusion and a higher probability of error especially for less experienced engineers that may be over-reliant on the supporting systems.

The document "A GNN-based Recommender System to Assist the Specification of Metamodels and Models" by J. di Rocco et al., PROCEEDINGS OF THE 24TH ACM/IEEE INTERNATIONAL CONFERENCE ON MODEL DRIVEN ENGINEERING LANGUAGES AND SYSTEMS, 10 October 2021 (2021-10-10), pages 70-81, XP034017555, DOI: 10.1109/MODELS50736.2021.00016 [retrieved on 2021-10-27] discloses "MORGAN", a recommender system based on a graph neural network (GNN) to assist modelers in performing the specification of metamodels and models. The (meta) model being specified, and the training data are encoded in a graph-based format by exploiting natural language processing (NLP) techniques. Afterwards, a graph kernel function uses the extracted graphs to provide modelers with relevant recommendations to complete the partially specified (meta)models.

The document "EXTREMO: An eclipse plugin for modelling and meta-modelling assistance" by Àngel Mora Segura et al., SCIENCE OF COMPUTER PROGRAMMING, vol. 180, 18 May 2019 (2019-05-18), pages 71-80, XP085745527, DOI:10.1016/J.SCICO.2019.05.003 [retrieved on 2019-05-18], discloses an Eclipse plugin aimed at gathering the information stored in heterogenous sources in a common data model.

The document "Entropy, Information gain, and Gini Index; the crux of a Decision Tree" by Rheka M, Published in Clairvoyant Blog, 14 October 2019 (2019-10-14), pages 1-5, XP055973012,Retrieved from the Internet:URL:https://blog. clairvoyantsoft.com/entropy-information-gain-and-gini-index-the-crux-of-a-decision-tree-99dOcdc699f4 [retrieved on 2022-10-19], discloses key information measures used in a decision tree algorithm.

The patent document US10437954 B1 " SYSTEM AND METHOD FOR RECOMMENDING INTEGRATED CIRCUIT PLACEMENT AND ROUTING OPTIONS" by Cadence Design System Inc., relates to a system and method for electronic design recommendations. More specifically, it relates to a method for recommending integrated circuit placement and routing options.

Accordingly, it is an object of the present invention to provide a possibility to improve recommender systems for engineering tools.

**Brief Summary of the Invention**

This is achieved by what is disclosed in the independent claims. Advantageous embodiments are subject of the dependent claims.

According to a first aspect, the invention relates to a computer implemented method for providing a recommender system.

The recommender system is for use in a design process of a complex system, e.g., an engineering project, e.g., an electric or electronic circuit.

The recommender system is generated by using a model of the complex system which is based on a graph neural network.

For this, the complex system is described by nodes which represent components of the complex system, e.g., a resistor and is described by edges which represent connections between the components, e.g., an electrical or mechanical connection.

During a design step of the design process an item is added to a node of the intermediate or partial design, e.g., a design that is not yet completed or final. This node is denoted as source node.

The recommender system computes a ranked list of all candidate items out of a variety of items, e.g., the items foreseen in a design program. Only a subset of this ranked list is provided to the user as recommendation, e.g., in order not to confuse the user.

The ranked list is determined by following steps:
For each item a calibrated score is determined that indicates a likelihood whether the specific item is added in the next design step.

A threshold is used for the scores, and it is determined whether at least one item is above the applied threshold.

According to an advantageous embodiment, if there are items with a calibrated score above the threshold, then these items form a subset of the ranked list which is provided, e.g., displayed, to the user.

If this is not the case, i.e., there is no item with a score above the threshold, then information is used, whether at least one property of the items is desired. E.g., information by a user is received, whether he or she would want that item to be introduced in the partial design. Then with the items possessing the desired property a subset of the ranked list is formed.

With the recommender system, for the subset the calibrated scores are determined. If there is now at least one item above the threshold this subset is used as ranked list and items thereof whose score is above the threshold is provided to the user.

According to an advantageous embodiment, if there is no item with a calibrated score above a threshold, that may be new or the same, then information us used, whether a further property of the items is desired, on basis of which a further subset is formed, for which calibrated scores are determined. This process can be iterated until items from the ranked list above a threshold can be provided to the user.

According to an advantageous embodiment, the threshold which is applied to the subset can be remain the same or can be adapted, preferably with regard to the scores determined for the first subset.

The invention further refers to a corresponding computer program and a corresponding recommendation device which is e.g., integrated in an engineering tool.

**Brief description of the drawings**

Further embodiments, features, and advantages of the present invention will become apparent from the subsequent description and dependent claims, taken in conjunction with the accompanying drawings of which show:

Fig. 1 an example of a process when designing or/and creating a complex system comprising several interconnected nodes representing components by adding, at each step a further component or item and connecting it to existing components or items, whereby the component is chosen from a ranked list.

Fig.2 shows schematically the input, which is the partial design and the set of candidate items, and the output of the underlying calibrated graph recommender, which is a ranked list with preferably calibrated scores.

Fig.3 shows a flow diagram of how the ranked list is created.

**Overview over the proposed methods and advantages thereof**

It is one object of the invention to propose an improved GNN based recommender system. Based on GNN means here that the recommender provides recommendation for a complex system which is described by a graph and the graph is encoded using a GNN.

According to an advantageous embodiment, a recommender system to be used in the context of an engineering tool is provided. By using the recommender, a list of items is provided in the engineering tool which are likely to be connected in a next step to an engineering project designed in the engineering tool.

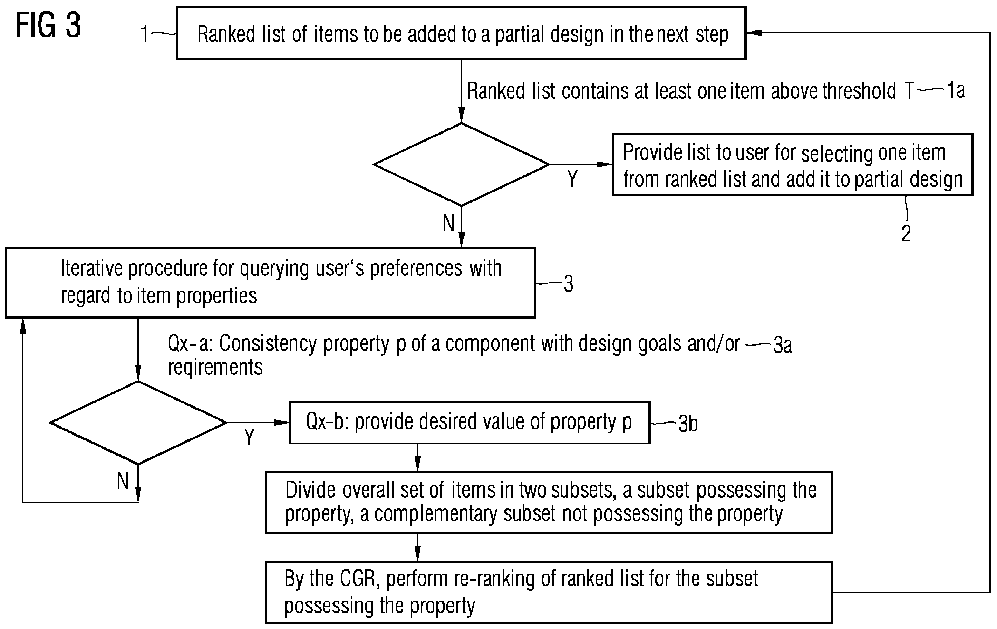

According to an aspect of the invention, a semi-interactive system for supporting the design or/and configuration process of complex engineering systems is proposed. "Semi-interactive" means that input is required only in certain circumstances, i.e., if there is no item with a score above the threshold, see e.g., description of Fig.3.

According to another aspect of a preferred embodiment of the invention, the underlying recommender is calibrated, i.e., the scores that the model assigns to the recommended items correspond to its level of confidence. The output of the recommender which is a ranked list of items is shown to the user only when it contains items whose score exceeds a given threshold. When this is not the case, the proposed system will trigger an automated procedure to query a user's preferences with regard to item properties that would allow the system to filter out unwanted items from the ranked list of items produced by the recommender.

The proposed recommendation system utilizes a graph neural network (GNN) which allows to leverage the structural information encoded in the graphs that represent complex engineering systems or projects that are being designed or/and configured by the user. Further, the recommender system is data-driven thus leveraging both a collection of previously configured projects and the technical features of the available items.

According to an advantageous embodiment in difference to the prior art, a calibrated graph neural network-based recommender is used. Furthermore, an automated procedure to query the user's preferences with regard to desired item properties as means to filter out unwanted items from the list of recommendations produced by the recommender as efficiently as possible is used.

In contrast, recommendation systems according to the prior art, are either

- entirely rule-based, leading the user through a hand-crafted set of questions; such systems are very inflexible and have to be manually maintained.
- data-driven and always display the generated list of recommendations irrespective of its validity.

The proposed embodiments of the recommender system have in particular the following advantages:

- Increased efficiency by using suitable ranked list of items: engineers can more quickly find the most relevant components and not be confused or waste time with irrelevant components
- Cost savings stemming from engineers working more efficiency and arriving at completed designs more quickly
- Increased user experience as user is supported in every step of the design process
- Improved performance of resulting designs by avoiding errors is component choice during design process and hence avoiding costly failures when putting the resulting design of the complex system, e.g., the completed circuit to practice.

In detail, one can distinguish between the advantages that arise from the usage of graph neural networks, model calibration, and employing an automated procedure to query a user's preferences.

Utilizing graph neural networks allows to take full advantage of the graph representation of the complex systems, e.g., the engineering systems or projects that are being built up by the user. Graphs are the most natural representation for such systems, with plenty of valuable information being encoded into the way items are inter-connected.

Model calibration acts as a sort of safety mechanism: it is sought to minimize the probability that the output of the recommender would confuse the user, and calibrated scores allow for making a decision whether to show the list of recommendations produced by the recommender to the user as is, or if collecting more information about the user's preferences is required.

Finally, the proposed automated procedure to query user's preferences allows to efficiently filter out unwanted items from the list produced by the recommender, thus leading to a useful output as quickly as possible. This increases user experience, as the user is bothered with as little questions as necessary.

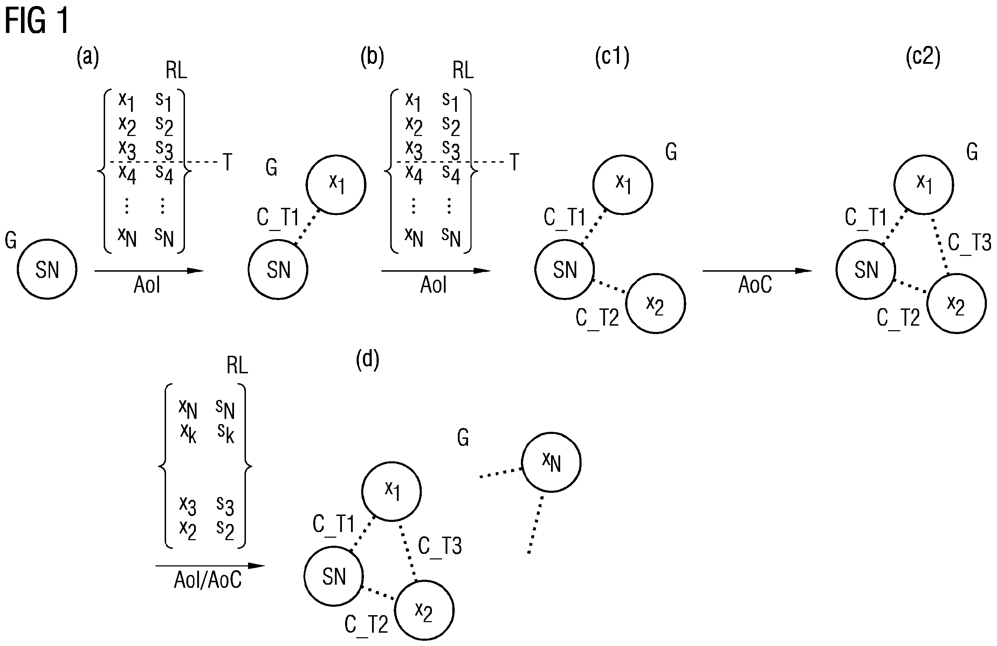

**Deployment and Usage (Fig. 1, 2 and 3)**

The proposed system operates in real time while the user is in the process of configuring a complex system, e.g., an engineering project.

First an outline the complete workflow on a high-level is described which is followed by a description of individual aspects of the invention in more depth.

(1) The user starts to configure a complex system, e.g., an engineering project. The initial state corresponds to a graph G that consists of a single node that represents the first item to be introduced into the project. This is depicted in Fig. 1 (a).

(2) The user iteratively adds new items $x_i$ from the ranked list RL to the engineering project by selecting one of the existing items. The item to which a further item will be added is represented by a node of the graph which is referred to as source node SN. In the ranked list RL the items and their respective core are provided. A providing, e.g., a displaying, to the user takes place only for items $x_i$ with a score $s_i$ above a threshold T. This section is indicated by the dotted line.

In an addition-of-items step AoI, the respective item represented by the source node will be connected to the newly introduced item $x_i$ which is also represented by a node of the graph. This is depicted in Fig. 1 (b) and (c1), (c2).

Afterwards, the user has an option to draw any missing connections C_Tx between the newly introduced item and the existing ones, where x is 1,2,3,... and denotes the type of connection. The connection C_Tx can be of various types, e.g., galvanically or inductively. This is depicted in Fig. 1 (d). Each of the designs represented by the graphs in Fig.1 (a), (b) and (c1, c2) is referred to as a partial design. The transition from one partial design to the other is referred to as design step.

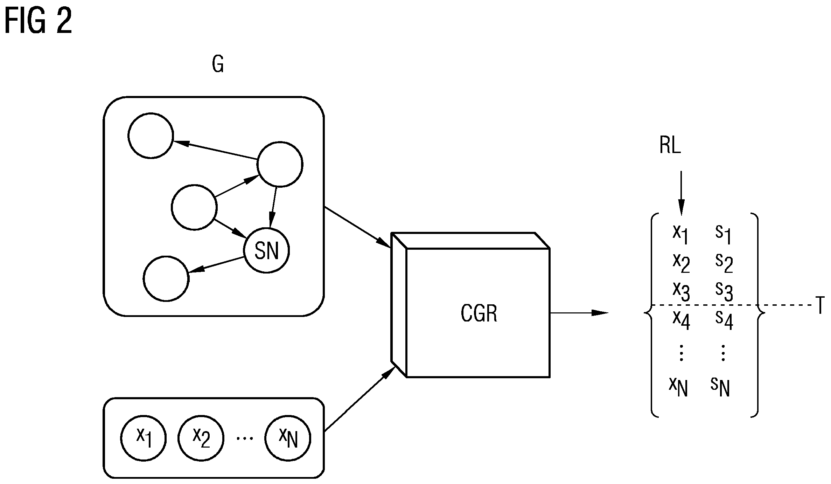

As can be seen, e.g., from Fig.2 the source node SN is selected anew at every addition-of-items step AoI, depending on where an item should be added and does not remain the initial node all the time.

By the graph G in Fig.2 a partially configured engineering project is represented where a source node SN has been selected.

(3) After the existing item, represented by the source node SN is selected, the calibrated graph recommender CGR is triggered. Internally, this recommender produces a ranked list of items, that are ordered with respect to the item scores produced by the CGR. This list consists of what is referred to as "candidate items" that are given to the CGR for scoring together with the graph representing the partially configured project and the reference to the source node SN.

Advantageously the scores are calibrated, meaning that they reflect the level of confidence that the model has in the correctness of the recommendation.

The situation when no suitable items on the ranked list RL, is explained with regard to Fig. 3:

(3a) If the ranked list RL of items produced by CGR, see reference (1) in the flow chart depicted in Fig.3, contains items whose score exceeds a given threshold T, see reference sign (1a) it is believed that these items are most likely suitable for the intended purpose and can be displayed to the user without a risk of confusing them. The user could then select one item from the list and iterate the step and add a new item to a new source node, see reference sign 2 of Fig.3. In other words, the items to be displayed can be described by:

$$\exists k \in \overline{1,N}: s_k \geq T \rightarrow display\ [x_1, x_2, ..., x_k]$$

The top bar means that the argument k on the left takes every value from 1 to N, i.e., the statement "display" is true to for each value k whose score $s_k$ is over the determined threshold. Therein, the score $s_k$ denotes the score for the candidate item $x_k$.

The determination or setting of the threshold is explained in the section "determination of threshold value T". (3b) If all the scores assigned by the CGR to the items in the ranked list are below the threshold T, then it is deemed that the recommendation system was not able to extract meaningful patterns from the input and there is a high chance that displaying the ranked list of items may confuse the user or even lead to an error. E.g., it is possible that the items erroneously located at the top of list might not even be compatible with existing items or suitable for the intended purpose, e.g., because they do not fit in the electric circuit at the specific position because a wrong component is chosen, e.g., a diode instead of a simple resistor, or a wrongly dimensioned component, e.g., a far too high inductance for the oscillating circuit to be completed.

In this case, an automated iterative procedure for querying user's preferences with regard to item properties is triggered, see reference sign 3. At every step of the procedure, a question is posed to the user. Depending on the user's answer, some of the candidate items $x_i$ are removed from the consideration and the CGR is triggered once again.

The goal of the procedure is to filter out at every step as many of the candidate items as possible, such that the criteria described under point (3a), i.e., having items to be displayed, is reached in the fewest number of steps.

The procedure identifying the question to be posed to the user will be described below.

According to an advantageous embodiment, candidate items that have been removed can be stored and used as negative samples in subsequent recommender model training procedures.

  (4) The user selects one of the items from the ranked list RL of recommendations.
  (5) The procedure is iterated until the engineering project is finalized.

**Procedure to compute recommendation scores with the CGR (Fig. 3)**

According to the invention, a graph-based data model to obtain an expressive representation of the engineering systems is employed.

Therefore, $X = \{x_1, x_2, ..., x_N\}$ denotes the set of candidate items, i.e., all components that exist in the framework of the engineering tool.

A complex system is represented by a graph $G = (V,E)$, where the vertex set $V = (v_1, v_2, ..., v_n)$ contains the configured components and $E \subset V \times V$ denotes the edge set. By edge set two components $v_i, v_j$ are denoted which are physically connected if and only if $(v_i, v_j) \in E)$.

Moreover, each component $v_i \in V$ comes with a feature vector $y_v \in \mathbb{R}^F$ that specifies the configured technical attributes. The dimension F of features is use case dependent.

By "the feature vector $y_v$ specifying the configured technical attributes" it is meant, that the feature vector has F lines of entries, each entry denoting the value of a feature or a property p of a specific component.

Precisely, each index in the feature vector corresponds to or represents a feature, while the value found at that index for a particular feature vector is the value of the respective feature for the respective part to which this vector corresponds.

According to an advantageous embodiment, F depends on technical attributes of the components. For example, if we have a first component A, e.g., a resistor, feature f1 may then reflect the resistance of value v1 and a second feature f2 may reflect a voltage dependance of the resistor v2. Regarding a second component B, e.g., a coil, it has a resistance of value v1' and a third feature f3, inductivity, the inductance having a value of v3 but e.g., not voltage dependence, i.e., feature 2 does not apply.

Then F can be chosen as 3 and the feature vector of component A would be (v1, v2, 0) and component B (v1', 0, v3).

According to an advantageous embodiment, $y_v$ also contains a one-hot encoding of the item types in $X$.

By "one-hot encoding" binary values are assigned to categorical values. For example, a categorical value would be "resistor", "inductance" or capacitance". E.g., to resistor the binary value 00 is assigned, to inductance the binary value 01 and to capacitance the binary value 10.

Additionally or alternatively, the one-hot encoding can be used to assign binary values to rational numbers, e.g. the size of physical quantity, e.g., resistance, inductivity etc.

  (1) In a first step, to compute recommendation scores for each item we employ a GNN denoted by $f$. $f$ takes as input the feature vector $v \in V$ of a given source node SN along with all the feature vectors of its neighboring nodes and produces a context-aware embedding $h_v \in \mathbb{R}^d$.

Heuristically speaking, a forward pass through $f$ first aggregates the feature vectors of all the components which are connected with $v$.

Generally, by a "forward pass" the calculating of values from output layers based on the input data by traversing all layers of the neural network.

(2) Then, in a second step, *f* combines this neighborhood information with $y_v$ to produce an encoding or embedding $h_v \in \mathbb{R}^d$.

Note that we can stack multiple layers of GNNs to obtain a more expressive encoder. In order to score all component types in the set of candidate items *X* against the source node SN, the *d*-dimensional embeddings of all possible components are calculated.

d is the number of entries of the embedding vector $h_v \in \mathbb{R}^d$. The size of d is heuristically decided when implementing the GNN based model.

The entries of the embedding vector are extracted from the GNN model, i.e., how and with which nodes the specific node, to which the feature vector refers, is connected. Thus, it depends on technical properties of a component which are described by the feature vectors, e.g., the size of the inductivity. However, the technical property is not taken alone, but in the context of other connected components. Thereby the component and the way of the connection are taken into account.

This calculation of the *d*-dimensional embeddings of all possible components can be realized by applying the GNN to a set of N singleton nodes, each corresponding to a prototypical component.

By singleton an individual node is meant which has no connections to other nodes. Thus, it reflects a component not being connected to other components, hence denoted as prototypical component. In this way the probability that an edge exists can be calculated.

If we denote the resulting component embedding matrix with $Z \in \mathbb{R}^{m \times d}$, we can compute linear recommendation score via

$$s = Z * \mathrm{h_{SN}}$$

where $s_i$ corresponds to a score that indicates the likelihood that the user chooses component $x_i$ and connects it to the source node SN. Very strictly spoken, not a component is connected to the source node, but an instance of said component, as for example the component "resistor" can be chosen several times or instances in a design.

The dimension m denotes the overall number of all possible items or components available in the engineering tool for the engineering project.

According to an advantageous embodiment, so-called "postprocessing calibration techniques" such as temperature scaling, histogram binning, or isotonic regression to produce calibrated recommendation scores are applied. "postprocessing" refers here to the fact that the calibration is done after a training of the GNN.

By applying calibration methods, the recommendation scores in s approximate the probabilities that the predicted label is the correct answer. In other words, each $s_i$ indicates the relative frequency that the user chooses $x_i$ as the next item.

**Procedure for querying user's preferences with regard to item properties (Fig.3)**

In the following the proposed iterative automated procedure for querying user's preference with regard to the desired item properties is described in connection with Fig.3.

The objective is to calculate a ranked list of all items, i.e., to calculate a score for all items, and provide to the user a part of the ranked list of items whose calibrated scores, which are assigned by the CGR, exceed a threshold T.

For a given input, it can happen that no candidate item gets assigned a sufficiently high calibrated score. In this situation, it is tried to obtain additional information regarding the desired item properties. Based on the collected information, a part of the candidate items is discarded and the CGR is asked to re-rank the remaining candidate items. Since there are fewer candidate items being scored now, some of them may now obtain a sufficiently high calibrated score to be displayed.

At every cycle of the iterative procedure, see reference sign 3 of Fig.3, the user is asked in a question Qx-a, whether a given property p of a component is consistent with their system design goals or/and requirements. Consistent means, e.g., that a component fits at the specific position of a circuit. If this is the case, then the user is asked in a question Qx-b, what the respective desired property value is.

If one would choose properties to be asked about at random, the number of questions to be posed to the user may be high, since very few candidate items might be discarded after each question.

Therefore, according to an advantageous embodiment the querying attempts to partition the set of candidate items from the ranked list into two approximately equal disjoint sets - those items that possess a certain property, and those that do not.

Technically this could be realized by a filtering based on domain knowledge an experienced user applies. To overcome this restraint, the technical problem of finding a useful set of candidate items, is described analytically. Partitioning the list in two approximately equal disjoint sets corresponds to selecting the property p that maximizes the Gini index:

$$p = argmax_{p \in P} G(p)$$

where $G(\cdot)$ is the Gini index operator and P is a set of all properties that are applicable to at least of candidate item $x_i$. argmax is the operator for calculating where the argument, here the Gini operator G(p), assumes its maximum. Thus, the value of p is determined as said above.

According to advantageous embodiments, depending on the nature of a given property p, the corresponding Gini index is computed as follows:

- If the property p is binary, i.e., it is either present for a given item or it is not applicable, Gini index is computed via

$$G(p) = p_f(1 - p_f),$$

where $p_f$ is the proportion of items within the ranked list that possess property p. As said above a ranked list with the ranking of all items is performed. To the user only that part of the ranked list is provided with items having a ranking above the threshold in order to avoid confusion of the user.

The question Qx-a that can be posed to the user with regard to this property, see reference sign 3a of Fig.3 is "Does the desired item possess property p?" with possible answers being either True or False. An example for a binary property would be a component either having a certain certificatior or not, e.g., "Fail-Safe".

- If property p is categorical in nature, i.e., it is either not applicable for a given item, or is applicable and takes on one of a limited number of possible values $y \in Y_p$, Gini index is computed via

$$G(p) = 1 - \sum_{y \in Y_p} p_y^2,$$

where $p_y$ is the proportion of items within the ranked list that possess property p with value y. Therein, $Y_p$ is the set of possible values for the property p, e.g., the size of a supply voltage.

The question Qx-a that can be posed to the user with regard to this property, see refence sign 3a of Fig.3, is "Does the desired item possess property p?" If yes, then question Qx-b is "What should be its value?". The possible answers thereof are all entries of $Y_p$ and "Not applicable".

- If property p is numerical in nature, we cannot compute the Gini index using the formula above, since it is extremely unlikely that property p would take on the same value for two distinct items.

An example for a numerical property would be the clock frequency of a CPU which is hardly the same for two different CPUs.

In such a situation, a derivative categorical property p' with values "> z" and "< z" is introduced, where z can be chosen e.g., as mean of the respective value range. Gini index can then be computed as in the case for categorical values above. For example, a second threshold z is chosen and the properties are categorized as being below or above the threshold. This constitutes then a derived property (p') which is used to calculate the Gini Index according to

$$G(p') = 1 - \sum_{y \in Y_{p'}} p'^2_y,$$

where $p'_y$ is the proportion of items within the ranked list that possess property p' with value y and $Y_{p'}$ is the set of possible values for the property p'.

The threshold can remain constant throughout the iterative process. Alternatively, it can be at least for some steps of the iterative process be adapted with regard to the created subset.

**CGR training**

During training we consider the dataset

$$T = \{(G^1, SN^1, x^1), (G^2, SN^2, x^2), \ldots\}.$$

That means the training set $T$ consists of triples ($G^i$, $SN^i$, $x^i$), where

$G^i$ corresponds to a partial (i.e., not completed) complex system of a design step i,
$SN^i$ is the source node to which in the subsequent design step an item represented by another node is added, and
$x^i \in X$ is the type of item, i.e., instance of a component, that is chosen by the user to extend $G^i$ at the i-th step at position or source node $SN^i$, i.e., the ground truth label that is tried to be predicted.

Ground truth is what was observed in the data used for training the recommendation system.

For example, ground truth is seen in real project examples. E.g., somebody, e.g., an experienced engineer at some point in the past chose to connect component x_i to a respective source node SN_i while building up the partial system represented by the graph G.

Thus, he or she did implicitly "label" this choice as the correct result, but one cannot be sure that any other person would do it the same.

Given each datapoint ($G^i$, $SN^i$, $x^i$) we first perform a forward pass through the CGR f to obtain a vector of scores $s^i$.

As said before, by "forward pass" the calculating of values from output layers based on the input data by traversing all layers of the neural network is meant. Here, the input are the training data $T = \{(G^1, SN^1, x^1), (G^2, SN^2, x^2), \ldots\}$, the neural network to be traversed is the CGR f and the output is the vector of scores $s^i$.

A loss function is then calculated from the output values. The loss function is chosen in dependence on the training objective.

Concerning the training objective, all canonical loss functions that are typically employed for the recommendation task are suitable candidates.

According to an advantageous example as loss function L a Personalized Ranking is chosen

$$L = -\sum_{i=1}^{N} \sum_{j \in \Gamma^i} log(\sigma(s_{x^i}^i - s_j^i)), \qquad (1)$$

where $\Gamma^i$ is a set of so-called negative examples that contains items represented by their indices that are not connected to the source node SN. $\sigma$ is a sigmoid function, given by $\sigma(t) = 1/(1+e^{-t})$.

N is the number of all nodes connected to the source node SN. $s_{x^i}^i$ is the score for the i-th element training set when using item $x^i$, $s_j^i$ is the score of the i-th element of the training set when using component j, where $j \in \Gamma^i$, i.e., being part of the negative examples set.

The loss function minimized with regard to the set of trainable parameters in f.

In case the proposed method is deployed in a real-world application such as a design software for electric circuits, one could store information on items that are filtered out when querying for the user's preferences and reuse these items as negative examples in equation (1). This can help to prevent false negatives and teach the model to rank items with undesirable technical attributes low.

**Determination of threshold value T**

In order to determine the threshold that serves as a cut-off value for the scores to display items to the user (see step 3a in the section Deployment / usage) according to an advantageous embodiment a rule of thumb is employed. According to an example, items are displayed that are at least 10% likely to be selected by the user.

According to an advantageous embodiment, when a subset of items with corresponding calibrated scores has been determined, the threshold is adapted depending on the scores.

According to another advantageous, after the ranking of all items has been calculated, the threshold is set such, that only a limited number of items, e.g., seven, are above the threshold.

According to another advantageous embodiment a value is chosen that maximizes a certain performance measure on a validation set. An example for such a value is the F1-score. With F-scores generally constituting a measure of a test's accuracy, F1 is the harmonic mean of the precision and recall. By precision the ratio of true positives and all retrieved items, i.e., true positives and false positives is denoted. By recall the ratio between true positives and all relevant elements, i.e., false negatives and true positives is denoted.

Preferably, for different values of the threshold some performance measure on the validation set is computed. Then that value of the threshold is chosen, that results in the highest value of the performance measure. F1 is an example of such performance measure.

**Further exemplary embodiments and applications of the proposed calibrated recommender system**

The proposed methods can be realized in software. Siemens examples where such methods can be included are Xpedition xDX Designer, Simcenter Amesim, TIA Portal, Teamcenter, TIA Selection Tool.

The application of the proposed methods can be seen in software realizations by looking at the ranking list of items:

Two projects, e.g., electronic circuits, consisting of the same set of items or components that differ only in the connectivity pattern leading to different ordering of recommendations can serve as an indication of the underlying recommendation system employing graph neural networks.

Further, use of the proposed methods could be detected by the following:

Each time the user answers a question posed by the system through the automated procedure to query user's preferences, several items will disappear from the ranked list of recommendations in addition to this list being re-ordered. If one had access to the technical properties of items that are to be considered by the procedure to query user's preferences, one could choose answers that would lead to a predictable or/and verifiable change in what items will remain in the ranked list of recommendations.

A further exemplary embodiment is an application in the engineering sector which can run on a mobile and predict for the engineer the next item to use when repairing an entity.

According to another advantageous embodiment the recommender system is not only used for design of a complex system such as a circuit but also adapted for predictive maintenance actions for a device as complex system.

In the context of this application, the design produced by using a recommender system is applied to manufacture e.g., a new hybrid car, an electronic component or circuit, electric design, design of a production street, design of a molecule etc. or parts thereof, if it suffices the requirements for the respective product, e.g., in view of functionality. Thus, the efforts in manufacturing and hence the costs can be reduced because the design obtained by the engineering tool can be analyzed in the relevant aspects beforehand.

The term "recommendation device" may refer to a computer on which the instructions can be performed.

The term "computer" may refer to a local processing unit, on which the client uses the engineering tool for designing purposes, as well as to a distributed set of processing units or services rented from a cloud provider. Thus, the term "computer" covers any electronic device with data processing properties, e.g., personal computers, servers, clients, embedded systems, programmable logic controllers (PLCs), FPGAs, ASICs handheld computer systems, pocket PC devices, mobile radio devices, smart phones, devices or any other communication devices that can process data with computer support, processors and other electronic devices for data processing. Computers may comprise one or more processors and memory units and may be part of a computer system. Further, the term computer system includes general purpose as well as special purpose data processing machines, routers, bridges, switches, and the like, that are standalone, adjunct or embedded.

The term "user" may in particular refer to an individual, a group of individuals sharing at least a part of properties or features or a company.

In the foregoing description, various aspects of the present invention have been described. However, it will be understood by those skilled in the art that the present invention may be practiced with only some or all aspects of the present invention. For purposes of explanation, specific configurations are set forth in order to provide a thorough understanding of the present invention.

However, it will also be apparent to those skilled in the art that the present invention may be practiced without these specific details.

Parts of the description will be presented in terms of operations performed by a computer system, using terms such as data, state, link, fault, packet, and the like, consistent with the manner commonly employed by those skilled in the art to convey the substance of their work to others skilled in the art. As is well understood by those skilled in the art, these quantities take the form of electrical, magnetic, or optical signals capable of being stored, transferred, combined, and otherwise manipulated through mechanical and electrical components of the computer system.

Additionally, various operations have been described as multiple discrete steps in turn in a manner that is helpful to understand the present invention. However, the order of description should not be construed as to imply that these operations are necessarily order dependent, in particular, the order of their presentation.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some of the notations that were used are:

edge set $E \subset V \times V$

embedding $h_v \in \mathbb{R}^d$ which is context aware

feature vector: $y_v \in \mathbb{R}^F$

Gini index operator $G(\cdot)$

graph $G = (V, E)$

property p

score $s_i$ indicating the likelihood that the user chooses component type $x_i$ and connects it to the source node SN set of all properties P

set of candidate items $X = \{x_1, x_2, ..., x_N\}$

vertex set $V = (v_1, v_2, ..., v_n)$ contains the configured components

**Claims**

1. Computer implemented method for providing a recommender system (CGR) for use in the design process of a complex system being an electric or electronic circuit or an ASIC or a circuit having one or more FPGAs or a processor or a SoC or an embedded system

   whereby the recommender system (CGR) is generated by use of a model of the complex system, said model based on a graph neural network (GNN),
   for said model, the complex system being described by nodes representing components of the complex system and edges representing connections between the components, wherein the design process comprises design steps in each of which at least one item is added to a source node (SN) of a partial design,
   whereby said recommender system (CGR) calculates a ranked list (RL) of all candidate items ($x_i$) out of a variety of items and provides to a user a subset of the ranked list (RL) as recommendation which item to add to the source node (SN) in a subsequent design step,
   said providing of the recommendation comprising the following steps:

   a) Determining for each item ($x_i$) a calibrated score($s_i$) indicating a likelihood that the specific item will be added in the subsequent design step;
   b) Applying a threshold (T) with regard to the score;
   c) Determining whether at least one item ($x_i$) has a score ($s_i$) above the applied threshold (T);
   d) If there is no item ($x_i$) with a calibrated score ($s_i$) above the threshold, then using information whether at least one property (p) of the items ($x_i$) is desired;
   e) Forming a subset of items possessing the desired property (p);
   f) Performing, by the recommender system (CGR), on the subset a computation of the calibrated scores ($s_i$) of the items contained in the subset;
   g) Applying a threshold for the subset;
   h) Using the ranked list (RL) of the subset as ranked list (RL) if at least one item ($x_i$) thereof has a calibrated score ($s_i$) above the threshold (T) applied for the subset and providing to the user the part of the ranked list (RL) above the threshold as recommendation of items to be added in the next design step.

2. Method according to the previous claim, wherein steps d through g are repeated until at least one item ($x_i$) has a score ($s_i$) above the threshold (T) for the respective subset.

3. Method according to any of the previous claims wherein the threshold (T) is either kept constant or adapted when applied to a subset.

4. Method according to any of the previous claims, wherein for the calibration of the score at least one of the following methods is applied:

   - Temperature scaling;
   - Histogram binning;
   - Isotonic regression.

5. Method according to any of the previous claims wherein for choosing the threshold (T) at least one of is performed:

- Choosing a predetermined number and taking it as threshold
- Calculating an F1 value as threshold
- Determining the threshold as a function of the calibrated score such, that a predetermined number of items is provided to the user

6. Method according to any of the previous claims, wherein the score is calculated by

$$s = Z * h_{SN}$$

wherein

s denotes the score,
Z denotes the embedding matrix obtained by calculating for all items out of the variety of items a probability that the item is connected to each other components $h_{SN}$ is the embedding vector of the source node, which is obtained by taking a features vector $v \in V$ of the source node and its neighboring nodes.

7. Method according to any of the previous claims wherein a preference query retrieving information about the desired property comprises the following steps:

i) Requesting, from the user, information whether property (p) is consistent with the design goals or/and requirements;
ii) If the received answer is yes, requesting, from the user, the desired value of the property (p).

8. Method according to any of the previous claims wherein the property (p) of which information is used for the forming of the subset is chosen such that the subset and a complementary subset, the latter not possessing the property, have approximately the same number of subset members by maximizing the Gini index G by

$$p = argmax_{p \in P} G(p)$$

wherein

p is he respective property
P is the set of all properties applicable to at least one item out of the variety of items.

9. Method according to any of the previous claims wherein the Gini index is calculated at least according to one of the following:

- if the property is binary meaning that an item can either possess or not possess the property by

$$G(p) = p_f(1 - p_f),$$

Where $p_f$ is the proportion of items within the ranked list
- if the property is categorical meaning that the property is either not applicable for an item or can assume a limited number of possible values by

$$G(p) = 1 - \sum_{y \in Y_p} p_y^2,$$

where $p_y$ is the proportion of items within the ranked list that possess property p with value y and $Y_p$ denotes the set of possible values for the property p
- if the property (p) is numerical, then choosing a second threshold z and categorizing the properties as being below or above the threshold forming a derived property (p') and then using these derived properties (p') to calculated the Gini Index according to

$$G(p') = 1 - \sum_{y \in Y_{p'}} p'^2_y,$$

- where $p'_y$ is the proportion of items within the ranked list that possess property p' with value y and
- $Y_{p'}$ is the set of possible values for the property p'.

**10.** Method according to any of the previous claims wherein the recommender system (CGR) is trained by

- considering data sets $T = \{(G^1, SN^1, x^1), (G^2, SN^2, x^2), ...\}$, wherein

$G^i$ corresponds to a partial complex system of a design step i,
$SN^i$ corresponds to the source node to which in the subsequent design step an item represented by another node is added, and
$x^i \in X$ is the item that is chosen by the user to extend the partial complex system $G^i$ at the i-th design step at the source node $SN^i$,

- performing a forward pass through the recommender system modelled by a graph neural network (f)
- minimizing the loss function which is chosen as

$$\mathbb{L} = -\sum_{i=1}^{N} \sum_{j \in \Gamma^i} \log\left(\left(\sigma\left(s^i_{x^i} - s^i_j\right)\right)\right.$$

where $s^i_{x^i}$ is the score for the i-th element training set when using item $x^i$,
$\Gamma^i$ is a set containing items represented by their indices that are not connected to the source node (SN),

$\sigma$ is a sigmoid function,

$s^i_j$ is the score of the i-th element of the training set when using component j, where $j \in \Gamma^i$,
and thus adapting at least one of, weights of the neural network or embedding vectors.

**11.** Method according to the previous claim, wherein the second subset of items not possessing the property (p) is used to produce training data (T) for a negative example of items contained in the set $\Gamma^i$ denoting that they should be excluded from the ranked list (RL).

**12.** Computer program comprising program instructions that cause, when the program is executed by a computer, the computer to carry out a method according to any of the previous claims.

**13.** Engineering Tool in which a recommendation device and a recommender system is integrated, wherein the recommender system is configured to execute the computer program according to the previous claim, wherein the recommendation device stores or/and provides or/and accesses the computer program according to the previous claim,

said recommendation device having a communication interface via which entries used in the program can be made or information being retrieved or/and by which access to a platform is granted on which the computer program is performed,
said recommendation device for use in an engineering tool for the design of a complex system comprising a variety of items proposing a selection of items to a specific user which are used at a design step, said selection being part of the subset having yielded a score above a predetermined threshold.

**14.** Engineering Tool according to the previous claim, in which the integrated recommendation device recommends items to be added in a step in the design process, said recommending being realized by a menu in which only a subset of items with a score over a predefined threshold (T) is displayed at each design step.

**Patentansprüche**

**1.** Computergestütztes Verfahren zum Bereitstellen eines Empfehlungssystems (CGR) zur Verwendung beim Entwerfen eines komplexen Systems, bei dem es sich um eine elektrische oder elektronische Schaltung oder eine ASIC oder eine Schaltung mit einem oder mehreren FPGA oder einen Prozessor oder ein SoC oder ein eingebettetes System handelt, wobei das Empfehlungssystem (CGR) durch Verwendung eines Modells von dem komplexen System generiert wird, wobei das Modell auf einem graphenbasierten neuronalen Netz (GNN) basiert,

wobei das komplexe System für das Modell durch Knoten, die Komponenten des komplexen Systems repräsentieren, und durch Kanten, die Verbindungen zwischen den Komponenten repräsentieren, beschrieben wird, wobei das Entwerfen Entwurfsschritte umfasst, in denen jeweils mindestens ein Objekt zu einem Source-Knoten (SN) eines Teilentwurfs hinzugefügt wird,

wodurch das Empfehlungssystem (CGR) eine Rangliste (RL) aller möglichen Objekte ($x_i$) unter verschiedenen Objekten berechnet und für einen Benutzer eine Untergruppe aus der Rangliste (RL) als Empfehlung bereitstellt, welches Objekt in einem nachfolgenden Entwurfsschritt zum Source-Knoten (SN) hinzugefügt werden könnte, wobei das Bereitstellen der Empfehlung folgende Schritte umfasst:

a) Bestimmen einer kalibrierten Bewertung ($s_i$) für jedes Objekt ($x_i$), die eine Wahrscheinlichkeit angibt, dass das konkrete Objekt in dem nachfolgenden Entwurfsschritt hinzugefügt wird,
b) Anwenden eines Grenzwerts (T) im Hinblick auf die Bewertung,
c) Bestimmen, ob mindestens ein Objekt ($x_i$) eine Bewertung ($s_i$) aufweist, die über dem angewendeten Grenzwert (T) liegt,
d) wenn es kein Objekt ($x_i$) mit einer kalibrierten Bewertung ($s_i$) gibt, die über dem Grenzwert liegt, Benutzen von Informationen, ob mindestens eine Eigenschaft (p) der Objekte ($x_i$) erwünscht ist,
e) Bilden einer Untergruppe von Objekten, die die erwünschte Eigenschaft (p) besitzen,
f) Durchführen einer Berechnung der kalibrierten Bewertungen ($s_i$) der in der Untergruppe enthaltenen Objekte durch das Empfehlungssystem (CGR) an der Untergruppe,
g) Anwenden eines Grenzwerts für die Untergruppe,
h) Benutzen der Rangliste (RL) der Untergruppe als Rangliste (RL), wenn mindestens ein Objekt ($x_i$) darunter eine kalibrierte Bewertung ($s_i$) aufweist, die über dem bei der Untergruppe angewendeten Grenzwert (T) liegt, und Bereitstellen des Teils der Rangliste (RL), der über dem Grenzwert liegt, als Empfehlung von im nächsten Entwurfsschritt hinzuzufügenden Objekten für den Benutzer.

2. Verfahren nach dem vorhergehenden Anspruch, wobei die Schritte d bis g wiederholt werden, bis mindestens ein Objekt ($x_i$) eine Bewertung ($s_i$) aufweist, die über dem Grenzwert (T) für die jeweilige Untergruppe liegt.

3. Verfahren nach einem der vorhergehenden Ansprüche, wobei der Grenzwert (T) entweder konstant gehalten oder angepasst wird, wenn er auf eine Untergruppe angewendet wird.

4. Verfahren nach einem der vorhergehenden Ansprüche, wobei zum Kalibrieren der Bewertung mindestens eines der folgenden Verfahren angewendet wird:

- Temperaturskalierung,
- Histogramm-Binning,
- isotonische Regression.

5. Verfahren nach einem der vorhergehenden Ansprüche, wobei zum Auswählen des Grenzwerts (T) Folgendes durchgeführt wird:

- Auswählen einer vorgegebenen Zahl und Verwenden als Grenzwert,
- Berechnen eines F1-Werts als Grenzwert und/oder
- derartiges Bestimmen des Grenzwerts in Abhängigkeit von der kalibrierten Bewertung, dass für den Benutzer eine vorgegebene Anzahl Objekte bereitgestellt wird.

6. Verfahren nach einem der vorhergehenden Ansprüche, wobei die Bewertung folgendermaßen berechnet wird:

$$s = Z * h_{SN}$$

wobei

s für die Bewertung steht,

Z für die Einbettungsmatrix steht, die durch Berechnen einer Wahrscheinlichkeit für alle Objekte unter den verschiedenen Objekten erhalten wird, dass das Objekt mit allen anderen Komponenten verbunden ist,

$h_{SN}$ der Einbettungsvektor des Source-Knotens ist, der durch Benutzen eines Merkmalsvektors $v \in V$ des Source-Knotens und seiner benachbarten Knoten erhalten wird.

7.  Verfahren nach einem der vorhergehenden Ansprüche, wobei eine Präferenzabfrage, die Informationen über die gewünschte Eigenschaft abruft, folgende Schritte umfasst:

    i) Anfordern von Informationen vom Benutzer, ob die Eigenschaft (p) den Zielen und/oder Anforderungen des Entwurfs entspricht,

    ii) wenn die empfangene Antwort "ja" lautet, Anfordern des gewünschten Werts für die Eigenschaft (p) vom Benutzer.

8.  Verfahren nach einem der vorhergehenden Ansprüche, wobei die Eigenschaft (p), deren Informationen zum Bilden der Untergruppe benutzt werden, so gewählt wird, dass die Untergruppe und eine komplementäre Untergruppe, die diese Eigenschaft nicht besitzt, in etwa die gleiche Anzahl Untergruppenmitglieder aufweisen, indem der Gini-Index G maximiert wird durch

$$p = argmax_{p \in P} G(p)$$

wobei

p für die jeweilige Eigenschaft steht,

P für den Satz aller Eigenschaften steht, die auf mindestens eins unter den verschiedenen Objekten anwendbar sind.

9.  Verfahren nach einem der vorhergehenden Ansprüche, wobei der Gini-Index folgendermaßen berechnet wird:

    - wenn die Eigenschaft binär ist, sprich ein Objekt die Eigenschaft aufweisen kann oder nicht:

$$G(p) = p_f\big(1 - p_f\big),$$

wobei $p_f$ der Anteil von Objekten in der Rangliste ist, und/oder,

    - wenn die Eigenschaft kategorisch ist, sprich entweder bei einem Objekt nicht zutrifft oder eine begrenzte Anzahl möglicher Werte annehmen kann:

$$G(p) = 1 - \sum_{y \in Y_p} p_y^2,$$

wobei $p_y$ der Anteil von Objekten in der Rangliste ist, die die Eigenschaft p mit dem Wert y aufweisen, und $Y_p$ für den Satz möglicher Werte für die Eigenschaft p steht, und/oder,

    - wenn die Eigenschaft (p) numerisch ist, Auswählen eines zweiten Grenzwerts z und Kategorisieren der Eigenschaften, die unter oder über dem Grenzwert liegen, als abgeleitete Eigenschaft (p') und Benutzen dieser abgeleiteten Eigenschaften (p') zum Berechnen des Gini-Index gemäß

$$G(p') = 1 - \sum_{y \in Y_{p'}} p_y'^2,$$

wobei $p_y'$ der Anteil von Objekten in der Rangliste ist, die die Eigenschaft p' mit dem Wert y aufweisen, und $Y_{p'}$ der Satz möglicher Werte für die Eigenschaft p' ist.

10. Verfahren nach einem der vorhergehenden Ansprüche, wobei das Empfehlungssystem (CGR) trainiert wird durch

- Berücksichtigen von Datensätzen T = {(G$^1$,SN$^1$,x$^1$), (G$^2$,SN$^2$,X$^2$), ...},
  wobei

  G$^i$ einem komplexen Teilsystem aus einem Entwurfsschritt i entspricht,
  SN$^i$ dem Source-Knoten entspricht, zu dem in dem nachfolgenden Entwurfsschritt ein Objekt hinzugefügt wird, das von einem anderen Knoten repräsentiert wird, und
  x$^i\in$X für das Objekt steht, das vom Benutzer zum Erweitern des komplexen Teilsystems G$^i$ beim i-ten Entwurfsschritt am Source-Knoten SN$^i$ ausgewählt wird,

- Durchführen eines Forward Pass durch das von einem graphenbasierten neuronalen Netz (f) modellierte Empfehlungssystem,
- Minimieren der Verlustfunktion, die so gewählt wird:

$$\mathbb{L} \; = \; -\sum_{i=1}^{N}\sum_{j\in\Gamma^i}\log\left((\sigma\left(s_{x^i}^i - s_j^i\right)\right.$$

wobei $s_{x^i}^i$ für die Bewertung des i-ten Elementtrainingssatzes steht, wenn Objekt x$^i$ benutzt wird,
$\Gamma^i$ für einen Satz steht, der Objekte enthält, die durch ihre Indizes repräsentiert werden und nicht mit dem Source-Knoten (SN) verbunden sind,
$\sigma$ eine S-Funktion ist,

$s_j^i$ für die Bewertung des i-ten Elements des Trainingssatzes steht, wenn die Komponente j benutzt wird, wobei j$\in\Gamma^i$,
und somit Anpassen von Gewichtungen des neuronalen Netzes und/oder von Einbettungsvektoren.

**11.** Verfahren nach dem vorhergehenden Anspruch, wobei die zweite Untergruppe von Objekten, die die Eigenschaft (p) nicht besitzen, zum Erstellen von Trainingsdaten (T) für ein negatives Beispiel für Objekte benutzt wird, die in dem Satz $\Gamma^i$ enthalten sind, und angibt, dass diese aus der Rangliste (RL) ausgeschlossen werden sollten.

**12.** Computerprogramm, das Programmanweisungen umfasst, die, wenn das Programm von einem Computer ausgeführt wird, diesen dazu veranlassen, ein Verfahren nach einem der vorhergehenden Ansprüche durchzuführen.

**13.** Entwicklungswerkzeug, in das eine Empfehlungsvorrichtung und ein Empfehlungssystem intergiert sind, wobei das Empfehlungssystem so konfiguriert ist, dass es das Computerprogramm nach dem vorhergehenden Anspruch ausführt, wobei die Empfehlungsvorrichtung das Computerprogramm nach dem vorhergehenden Anspruch speichert und/oder bereitstellt und/oder darauf zugreift, wobei die Empfehlungsvorrichtung eine Kommunikationsschnittstelle aufweist, über die in dem Programm benutzte Eingaben vorgenommen oder Informationen abgerufen werden können und/oder Zugriff auf eine Plattform gewährt wird, auf der das Computerprogramm ausgeführt wird, wobei die Empfehlungsvorrichtung zur Verwendung bei einem Entwicklungswerkzeug zum Entwerfen eines komplexen Systems, das verschiedene Objekte umfasst, einem konkreten Benutzer eine Auswahl von Objekten vorschlägt, die bei einem Entwurfsschritt benutzt werden, wobei die Auswahl Bestandteil der Untergruppe ist, für die sich eine Bewertung ergibt, die über einem vorgegebenen Grenzwert liegt.

**14.** Entwicklungswerkzeug nach dem vorhergehenden Anspruch, bei dem die integrierte Empfehlungsvorrichtung Objekte empfiehlt, die bei einem Schritt beim Entwerfen hinzugefügt werden sollen, wobei die Empfehlung über ein Menü erfolgt, in dem bei jedem Entwurfsschritt nur eine Untergruppe von Objekten mit einer über einem vorgegebenen Grenzwert (T) liegenden Bewertung angezeigt wird.

**Revendications**

**1.** Procédé mis en œuvre sur ordinateur permettant de fournir un système de recommandation (CGR) pour utilisation dans le processus de conception d'un système complexe qui est un circuit électrique ou électronique ou un ASIC ou un circuit présentant un ou plusieurs FPGA ou un processeur ou un SoC ou un système intégré selon lequel le système de recommandation (CGR) est généré par l'utilisation d'un modèle du système complexe, ledit modèle étant basé sur un réseau neuronal graphique (GNN),

pour ledit modèle, le système complexe étant décrit par des nœuds représentant des composants du système complexe et des bords représentant des connexions entre les composants, dans lequel le processus de conception comprend des étapes de conception dans chacune desquelles au moins un élément est ajouté à un nœud source (SN) d'une conception partielle,

dans lequel ledit système de recommandation (CGR) calcule une liste de classement (RL) de tous les éléments candidats (x_i) à partir d'une variété d'éléments et fournit à un utilisateur un sous-ensemble de la liste de classement (RL) comme recommandation de l'élément qu'il convient d'ajouter au nœud source (SN) dans une étape de conception successive,

ladite fourniture de la recommandation comprenant les étapes suivantes :

a) déterminer, pour chaque élément (x_i) un score étalonné (s_i) indiquant une probabilité que l'élément spécifique soit ajouté dans l'étape de conception suivante ;
b) appliquer un seuil (T) relativement au score ;
c) déterminer si au moins un élément (x_i) présente un score (s_i) supérieur au seuil appliqué (T) ;
d) s'il n'y a aucun élément (x_i) avec un score étalonné (s_i) au-dessus du seuil, alors utiliser des informations si au moins une propriété (p) des éléments (x_i) est souhaitée ;
e) former un sous-ensemble d'éléments possédant la propriété souhaitée (p) ;
f) réaliser, par le système de recommandation (CGR), sur le sous-ensemble, un calcul des scores étalonnés (s_i) des éléments contenus dans le sous-ensemble ;
g) appliquer un seuil pour le sous-ensemble ;
h) utiliser la liste de classement (RL) du sous-ensemble comme liste de classement (RL) si au moins un élément (x_i) de celle-ci présente un score étalonné (s_i) supérieur au seuil (T) appliqué pour le sous-ensemble et fournir à l'utilisateur la partie de la liste de classement (RL) supérieure au seuil comme recommandation des éléments à ajouter dans la prochaine étape de conception.

2. Procédé selon la revendication précédente, dans lequel les étapes d à g sont répétées jusqu'à ce qu'au moins un élément (x_i) présente un score (s_i) supérieur au seuil (T) pour le sous-ensemble respectif.

3. Procédé selon l'une quelconque des revendications précédentes, dans lequel le seuil (T) est soit maintenu constant ou adapté lorsqu'il est appliqué à un sous-ensemble.

4. Procédé selon l'une quelconque des revendications précédentes, dans lequel pour le calcul du score au moins un des procédés suivants est appliqué :

- échelle de température ;
- tri d'histogramme ;
- régression isotonique.

5. Procédé selon l'une quelconque des revendications précédentes, dans lequel, afin de choisir le seuil (T) au moins une des actions suivantes est réalisée :

- choisir un nombre prédéterminé et le prendre comme seuil ;
- calculer une valeur F1 comme seuil ;
- déterminer le seuil en fonction du score étalonné de sorte qu'un nombre prédéterminé d'éléments soit fourni à l'utilisateur.

6. Procédé selon l'une quelconque des revendications précédentes, dans lequel le score est calculé de la façon suivante :

$$s = Z * h_{SN}$$

dans lequel

s représente le score,
Z représente la matrice d'intégration obtenue en calculant pour tous les éléments parmi la variété d'éléments une probabilité que l'élément soit connecté à l'un ou l'autre des éléments,
h_{SN} est le vecteur d'intégration du nœud source, qui est obtenu en prenant un vecteur de caractéristiques $v \in V$ du

nœud source et ses nœuds voisins.

**7.** Procédé selon l'une quelconque des revendications précédentes, dans lequel une demande de préférence de récupération d'informations concernant la propriété souhaitée comprend les étapes suivantes :

    i) demander, à l'utilisateur, des informations afin de savoir si la propriété (p) est cohérente avec les objectifs et/ou les exigences de conception ;
    ii) si la réponse reçue est oui, demander, à l'utilisateur, la valeur souhaitée de la propriété (p).

**8.** Procédé selon l'une quelconque des revendications précédentes, dans lequel la propriété (p) dont les informations sont utilisées pour la formation du sous-ensemble est choisie de sorte que le sous-ensemble et un sous-ensemble complémentaire, ce dernier ne possédant pas la propriété, présentent approximativement le même nombre d'éléments de sous-ensemble en maximisant l'indice de Gini G par

$$p = argmax_{p \in P} G(p)$$

dans lequel,

    p est la propriété respective,
    P est l'ensemble de toutes les propriétés applicables à au moins un élément sur la variété d'éléments.

**9.** Procédé selon l'une quelconque des revendications précédentes, dans lequel l'indice de Gini est calculé au moins de l'une des façons suivantes :

    - si la propriété est binaire, ce qui signifie qu'un élément peut soit posséder, soit ne pas posséder la propriété, par

$$G(p) = p_f(1 - p_f),$$

    où $p_f$ est la proportion d'éléments dans la liste de classement
    - si la propriété est catégorique, ce qui signifie que la propriété est soit non applicable pour un élément, soit elle peut prendre un nombre limité de valeurs possibles, par

$$G(p) = 1 - \sum_{y \in Y_p} p_y^2,$$

    où $p_y$ est la proportion d'éléments dans la liste de classement qui possède une propriété p avec une valeur y et $Y_p$ représente l'ensemble de valeurs possibles pour la propriété p,
    - si la propriété (p) est numérique, alors il convient de choisir un second seuil z et de catégoriser les propriétés comme étant inférieures ou supérieures au seuil formant une propriété dérivée (p') puis utiliser ces propriétés dérivées (p') afin de calculer l'indice de Gini selon la formule :

$$G(p') = 1 - \sum_{y \in Y_{p'}} p'^2_y,$$

    - où $p'_y$ est la proportion d'éléments dans la liste de classement qui possèdent la propriété p' avec la valeur y, et
    - $Y_{p'}$ est l'ensemble de valeurs possibles pour la propriété p'.

**10.** Procédé selon l'une quelconque des revendications précédentes, dans lequel le système de recommandation (CGR) est formé en

    - considérant des ensembles de données $T = \{(G^1, SN^1, x^1), (G^2, SN^2, x^2), ...\}$,

        $G^i$ correspond à un système complexe partiel d'une étape de conception i,
        $SN^i$ correspond au nœud source auquel, dans l'étape suivante de conception, un élément représenté par un autre nœud est ajouté, et

$x^i{\in}X$ est l'élément qui est choisi par l'utilisateur afin d'étendre le système complexe partiel $G^i$ à la i$^{ième}$ étape de conception au nœud source $SN^i$,

- réalisant un passage en avant à travers le système de recommandation modélisé par un réseau neuronal graphique (f)
- minimisant la fonction de perte qui est choisie comme

$$\mathbb{L} \;=\; -\sum_{i=1}^{N} \sum_{j\in\Gamma^i} \log \left(\left(\sigma\left(s_{x^i}^{i} - s_j^{i}\right)\right.\right.$$

dans lequel $s_{x^i}^{i}$ est le score pour le i$^{ième}$ élément formant un ensemble lors de l'utilisation de l'élément $x^i$, $\Gamma^i$ est un ensemble contenant des éléments représentés par leurs indices qui ne sont pas liés au nœud source (SN),

$\sigma$ est une fonction sigmoïde,

$s_j^{i}$ est le score du i$^{ième}$ élément de l'ensemble de formation lors de l'utilisation du composant j, où $j{\in}\Gamma^i$, et donc l'adaptation d'au moins un des poids du réseau neuronal ou des vecteurs d'intégration.

11. Procédé selon la revendication précédente, dans lequel le second sous-ensemble d'éléments ne possédant pas la propriété (p) est utilisé afin de produire des données de formation (T) pour un exemple négatif d'éléments contenus dans l'ensemble $\Gamma^i$ dénotant qu'ils devraient être exclus de la liste de classement (RL).

12. Programme informatique comprenant des instructions de programme qui amènent l'ordinateur, lorsque le programme est exécuté par un ordinateur, à réaliser un procédé selon l'une quelconque des revendications précédentes.

13. Outil d'ingénierie dans lequel un dispositif de recommandation et un système de recommandation sont intégrés, dans lequel le système de recommandation est configuré afin d'exécuter le programme informatique selon la revendication précédente,

dans lequel le dispositif de recommandation stocke et/ou fournit et/ou accède au programme informatique selon la revendication précédente,

ledit dispositif de recommandation présentant une interface de communication par le biais de laquelle des entrées utilisées dans le programme peuvent être réalisées ou des informations récupérées et/ou par laquelle l'accès à une plate-forme est accordé sur laquelle le programme informatique est exécuté,

ledit dispositif de recommandation pour utilisation dans un outil d'ingénierie pour la conception d'un système complexe comprenant une variété d'éléments proposant une sélection d'éléments à un utilisateur spécifique qui sont utilisés lors d'une étape de conception, ladite sélection faisant partie du sous-ensemble ayant donné un score supérieur à un seuil prédéterminé.

14. Outil d'ingénierie selon la revendication précédente, dans lequel le dispositif de recommandation intégré recommande des éléments à ajouter dans une étape dans le processus de conception, ladite recommandation étant réalisée par un menu dans lequel seul un sous-ensemble d'éléments avec un score supérieur à un seuil prédéfini (T) est affiché lors de chaque étape de conception.

FIG 1

FIG 2

EP 4 270 236 B1

**FIG 3**

1 — Ranked list of items to be added to a partial design in the next step

Ranked list contains at least one item above threshold T — 1a

Provide list to user for selecting one item from ranked list and add it to partial design — 2

Iterative procedure for querying user's preferences with regard to item properties — 3

Qx-a: Consistency property p of a component with design goals and/or reqirements — 3a

Qx-b: provide desired value of property p — 3b

Divide overall set of items in two subsets, a subset possessing the property, a complementary subset not possessing the property

By the CGR, perform re-ranking of ranked list for the subset possessing the property

EP 4 270 236 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10437954 B1

**Non-patent literature cited in the description**

- **J. DI ROCCO et al.** A GNN-based Recommender System to Assist the Specification of Metamodels and Models. *PROCEEDINGS OF THE 24TH ACM/IEEE INTERNATIONAL CONFERENCE ON MODEL DRIVEN ENGINEERING LANGUAGES AND SYSTEMS*, 27 October 2021, 70-81

- **ÀNGEL MORA SEGURA et al.** EXTREMO: An eclipse plugin for modelling and meta-modelling assistance. *SCIENCE OF COMPUTER PROGRAMMING*, 18 May 2019, vol. 180, 71-80
- **RHEKA M**. Entropy, Information gain, and Gini Index; the crux of a Decision Tree. Clairvoyant Blog, 19 October 2022, 1-5